(19) Europäisches Patentamt / European Patent Office / Office européen des brevets

(11) **EP 4 654 345 A1**

(12) **EUROPEAN PATENT APPLICATION**
published in accordance with Art. 153(4) EPC

(43) Date of publication:
**26.11.2025 Bulletin 2025/48**

(21) Application number: **23930066.8**

(22) Date of filing: **08.12.2023**

(51) International Patent Classification (IPC):
**H01M 50/172** (2021.01)   **H01M 50/296** (2021.01)
**H01M 50/531** (2021.01)

(52) Cooperative Patent Classification (CPC):
**H01M 50/172; H01M 50/204; H01M 50/244;**
**H01M 50/289; H01M 50/296; H01M 50/298;**
**H01M 50/531; H01M 50/533;** Y02E 60/10

(86) International application number:
**PCT/CN2023/137495**

(87) International publication number:
**WO 2024/198501 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **31.03.2023   CN 202310334895**

(71) Applicant: **Contemporary Amperex Technology**
**(Hong Kong) Limited**
**Hong Kong (HK)**

(72) Inventors:
 • **WU, Lili**
  **Ningde, Fujian 352100 (CN)**

 • **DONG, Miaomiao**
  **Ningde, Fujian 352100 (CN)**
 • **LI, Xuan**
  **Ningde, Fujian 352100 (CN)**
 • **YIN, Ziyi**
  **Ningde, Fujian 352100 (CN)**
 • **WU, Longsheng**
  **Ningde, Fujian 352100 (CN)**
 • **SUN, Xin**
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY CELL, BATTERY, AND ELECTRIC DEVICE**

(57)    The present application provides a battery cell, a battery, and an electric device. The battery cell comprises an electrode body and tabs, the thickness of the electrode body is smaller than or equal to a preset thickness value, each tab has a first side edge and a second side edge which are opposite, and the first side edge of the tab is connected to the electrode body, wherein a first size of the tab is greater than or equal to a distance between the first side edge of the tab and the second side edge of the tab, and the first size is a length that the tab extends from the side where the first side edge is located to the side where the second side edge is located.

FIG. 5

EP 4 654 345 A1

## Description

### CROSS-REFERENCE

The present application refers to Chinese Patent Application No. 202310334895.1, entitled "BATTERY CELL, BATTERY, AND ELECTRIC DEVICE", filed on Friday, March 31, 2023, which is incorporated herein by reference in its entirety.

### TECHNICAL FIELD

The present application relates to the technical field of batteries, and in particular, to a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

During the charging process, the battery cell expands, which affects the reliability of the battery cell. In the development of battery technologies, how to improve the reliability of a battery cell is an urgent problem to be solved in the battery technologies.

### SUMMARY

The present application aims to solve at least one of the technical problems existing in the prior art. Therefore, an objective of the present application is to provide a battery cell, a battery, and an electric device, so as to solve the battery safety problem caused by the expansion of the battery cell.

Embodiments of a first aspect of the present application provide a battery cell. The battery cell includes an electrode body and a tab, where the thickness of the electrode body is less than or equal to a preset thickness value; the tab has a first side edge and a second side edge that are opposite to each other, and the first side edge of the tab is connected to the electrode body; where a first dimension of the tab is greater than or equal to a distance between the first side edge of the tab and the second side edge of the tab, where the first dimension is an extension length of the tab from the side where the first side edge is located to the side where the second side edge is located.

In the technical solutions of the embodiment of the present application, the first dimension of the tab, namely the extension length of the tab from the side where the first side edge is located to the side where the second side edge is located, is greater than or equal to the distance between the first side edge and the second side edge of the tab, such that the tab is in a relaxed state before and after the electrode body expands, and thus the problem that the tab is possibly pulled and torn due to the fact that the electrode body expands to pull the tab is avoided to a certain extent, thereby improving the reliability of the battery cell.

In some embodiments, the battery cell includes a plurality of tabs, the plurality of tabs are located at a same end of the electrode body and are disposed along a thickness direction of the electrode body, and the second side edges of the plurality of tabs are connected. Each of the plurality of tabs is in a relaxed state, such that the tab is in a relaxed state before and after the electrode body expands, the problem that the tab is possibly pulled and torn due to the fact that the electrode body expands to pull the tab is avoided to a certain extent, and thus the reliability of the battery cell is improved.

In some embodiments, the plurality of tabs includes a target tab, a first dimension of the target tab is the maximum of the first dimensions of the plurality of tabs, and a distance $T_M$ between a first side edge of the target tab and a second side edge of the target tab in the thickness direction of the electrode body, the first dimension $L_M$ of the target tab, and a distance H between the second side edge of the target tab and the electrode body satisfy a preset relationship, such that the first dimension $L_M$ is greater than or equal to the distance between the first side edge of the target tab and the second side edge of the target tab. By setting the target tab farthest from the electrode terminal in the battery cell to be in a relaxed state, other tabs can also be in a relaxed state, such that when the battery cell expands, the problem that the tab is possibly pulled and torn due to the fact that the electrode body expands to pull the tab is avoided to a certain extent, and thus the reliability of the battery cell is improved.

In some embodiments, the preset relationship includes $(H+T_M)^2 > L_M^2$. By setting the square of the sum of the distance H between the second side edge of the target tab and the electrode body and the distance $T_M$ between the first side edge of the target tab and the second side edge of the target tab in the thickness direction of the electrode body to be greater than the square of the first dimension $L_M$ of the target tab, the value of the first dimension $L_M$ of the target tab can be reduced, which can not only reduce the possibility that the target tab in the battery cell is pulled and torn, but also prevent the oversized first dimension of the target tab that can lead to waste or interfere with the connection between the tab and the electrode body.

In some embodiments, the preset relationship includes $L_M^2 > H^2+T_M^2$. By setting the sum of the square of the distance H between the second side edge of the target tab and the electrode body and the square of the distance $T_M$ between the first side edge of the target tab and the second side edge of the target tab in the thickness direction of the electrode body to be less than the square of the distance between the first side edge of the target tab and the second side edge of the target tab, the first dimension $L_M$ of the target tab can be greater than or equal to the distance between the first side edge of the target tab and the second side edge of the target tab, such that the tab can be in a relaxed state before and after the electrode body expands, the problem that the tab is possibly pulled and torn due to the fact that the electrode body expands to pull the tab is avoided to a certain extent, and thus the reliability of the battery cell is improved.

In some embodiments, the plurality of tabs further include a reference tab, a first dimension of the reference tab is the minimum of the first dimensions of the plurality of tabs, the preset thickness value of the electrode body is T, the electrode body includes N tabs, and $T_M = (M/N) \times T$ if (M-2) tabs are located between the target tab and the reference tab; where M is a positive integer greater than 2, and N is a positive integer greater than or equal to M. The distance $T_M$ of the second side edge of the target tab in the thickness direction of the electrode body is calculated based on the tab with the smallest first dimension among the plurality of tabs as the reference tab and the number of tabs located between the reference tab and the target tab as well as the total number of tabs included in the electrode body, such that the determination result of the distance $T_M$ between the first side edge of the target tab and the second side edge of the target tab in the thickness direction of the electrode body is simpler and more accurate.

In some embodiments, the target tab and the reference tab are located on opposite sides of the electrode body in the thickness direction. By arranging the target tab and the reference tab on the opposite sides of the electrode body in the thickness direction, the structure of the battery cell can be simpler, and it is easier to realize in process manufacturing, which improves the manufacturing efficiency and reduces the manufacturing cost to a certain extent.

In some embodiments, the preset thickness value is the thickness of the electrode body when the battery cell is charged to a state of charge greater than or equal to 95% at a preset charging rate. By setting the preset thickness value as the thickness of the electrode body when the battery cell is charged to the state of charge greater than or equal to 95% at a preset charging rate, the state of charge of the electrode body can be closer to the saturation state under the condition that the charging capacity, charging efficiency, charging reliability and battery lifespan satisfy the requirements for full charge, such that the preset thickness can be closer to the maximum value, and the tab is not easy to be pulled and torn under the condition that the battery cell is at the preset thickness, avoiding the problem that the tab is possibly pulled and torn due to the fact that the electrode body expands to pull the tab to a certain extent.

In some embodiments, the electrode body includes a plurality of first electrode plates, a plurality of second electrode plates, and separators. A first height value of the first electrode plate in a height direction of the electrode body is less than or equal to a preset height value; the plurality of second electrode plates and the plurality of first electrode plates are alternately laminated along the thickness direction of the electrode body, and a height of the second electrode plate in the height direction of the electrode body is a second height value; each separator is located between any adjacent first electrode plate and second electrode plate, and a height of the separator in the height direction of the electrode body is a third height value; where the third height value of the separator is greater than the first height value, the first height value is greater than the second height value of the second electrode plate, a difference value between the third height value and the first height value is a first difference value, the first difference value is greater than a preset expansion threshold, and the preset expansion threshold is positively correlated with a silicon content of the first electrode plate. By setting the third height value of the separator to be greater than the first height value of the first electrode plate, and the first difference value between the third height value of the separator and the first height value of the first electrode plate to be greater than the preset expansion threshold, the first height value of the first electrode plate can still not exceed the third height value of the separator after expansion, and meanwhile, the first height value of the first electrode plate is greater than the second height value of the second electrode plate, thereby improving the reliability of the battery cell.

In some embodiments, a difference value between the first difference value and the preset expansion threshold is a second difference value, a difference value between the first height value and the second height value is a third difference value, and the second difference value is greater than the third difference value. It can not only ensure that the first height value of the first electrode plate after expansion is less than the third height value of the separator, such that the first height value of the first electrode plate will not exceed the third height value of the separator, but also make the difference value between the third height value of the separator and the first height value of the first electrode plate after expansion greater than the third difference value between the first height value and the second height value, thereby improving the reliability of the battery cell.

In some embodiments, the first difference value is less than a sum of the preset thickness value T of the electrode body and the distance H between the second side edge and the electrode body. The first electrode plate can satisfy the expansion condition and reduce waste.

In some embodiments, the first height value of the first electrode plate is greater than or equal to 100 millimeters. When the first height value of the first electrode plate is greater than or equal to 100 millimeters, the expansion of the first electrode plate in the height direction of the electrode body can be more obvious, so it is necessary to set the first height value of the first electrode plate, which can reduce unnecessary restrictions on the first height value of the first electrode plate.

In some embodiments, the first height value is less than or equal to a set height value, where the set height value is negatively correlated with the silicon content of the first electrode plate. By limiting the first height value to be less than or equal to the set height value, the height of the first electrode plate in the height direction of the electrode body can be in a proper range, and the height design of the electrode plates in the battery cell can be simplified.

In some embodiments, the set height value is a ratio of 200 millimeters to the silicon content of the first electrode plate. By defining the set height value as the ratio of 200 millimeters to the silicon content of the first electrode plate, the first height value of the first electrode plate being excessively large in the height direction of the electrode body can be avoided to some extent, thereby improving the reliability of the battery cell.

In some embodiments, the silicon content of the first electrode plate is greater than or equal to 15% and less than or equal to 100%. The silicon content of the first electrode plate is greater than or equal to 15%, which can reduce the cost of the battery cell, enhance the energy density of the battery cell, and increase the charging speed of the battery cell.

In some embodiments, the silicon content of the first electrode plate is greater than or equal to 30% and less than or equal to 55%. The silicon content in this range can avoid the over-expansion of the first electrode plate to a certain extent and reduce the lithium plating of the battery cell.

In some embodiments, in the thickness direction of the electrode body, the separators are bent and extended to form a plurality of planar portions and a plurality of bent portions, each planar portion is located between adjacent first electrode plate and second electrode plate, and each bent portion is located between two adjacent planar portions. When expanding, the first electrode plate and the second electrode plate may expand in a direction far away from the bent portion, such that the probability that the first electrode plate and the second electrode plate contact the separator to cause the first electrode plate and the second electrode plate to bend and the probability that the first electrode plate and the second electrode plate cause the separator to tear can be reduced, thereby improving the reliability of the battery cell.

In some embodiments, the plurality of tabs include first tabs, where each first tab is connected to a first electrode plate, and the first tab is located on one side of the first electrode plate proximal to the bent portion corresponding to a position of the first electrode plate. The first tab is located on one side of the first electrode plate proximal to the bent portion corresponding to the position of the first electrode plate, which can make the first tab expand along the opening opposite to the bent portion when expanding, thus reducing the possibility that the first tab expands toward the bent portion of the separator to puncture the bent portion, and further improving the performance reliability of the battery cell.

In some embodiments, the plurality of tabs include second tabs, where each second tab is connected to a second electrode plate, and the second tab is located on one side of the second electrode plate proximal to the bent portion corresponding to a position of the second electrode plate. The second tab is located on one side of the second electrode plate proximal to the bent portion corresponding to the position of the second electrode plate, which can make the second tab expand along the opening opposite to the bent portion when expanding, thus reducing the possibility that the second tab expands toward the bent portion proximal to the separator to puncture the bent portion, and further improving the performance reliability of the battery cell.

In some embodiments, the preset height value is a height of the first electrode plate when the battery cell is charged to a state of charge greater than or equal to 95% at a preset charging rate. By setting the present height value as the thickness of the electrode body when the battery cell is charged to the state of charge greater than or equal to 95% at a preset charging rate, the state of charge of the electrode body can be closer to the saturation state under the condition that the charging capacity, charging efficiency, charging reliability and battery lifespan satisfy the requirements for full charge, such that the preset height value can be closer to the maximum value, and thus the first height value of the first electrode plate after expansion will not exceed the third height value of the separator.

Embodiments of a second aspect of the present application provide a battery, which includes the battery cell of any of the above embodiments.

Embodiments of a third aspect of the present application provide an electric device, which includes the battery of the above embodiments, the battery being configured to provide electric energy.

The above description is only an overview of the technical solution of the present application. To more clearly understand the technical means of the present application to enable implementation in accordance with the content of the specification and to make the above and other purposes, features, and advantages of the present application more obvious and easy to understand, the detailed description of the present application is provided below.

BRIEF DESCRIPTION OF THE DRAWINGS

In the accompanying drawings, unless otherwise specified, the same reference numerals across multiple accompanying drawings indicate the same or similar components or elements. The accompanying drawings are not necessarily drawn to scale. It should be understood that the accompanying drawings depict only some embodiments of the present application and are therefore not to be considered as limiting the scope of the present application. To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.

FIG. 1 is a schematic structural diagram of a vehicle according to some embodiments of the present application;

FIG. 2 is a schematic diagram of an exploded structure of a battery according to some embodiments of the present application;

FIG. 3 is a schematic diagram of an exploded structure of a battery cell according to some embodiments of the present application;

FIG. 4 is a schematic structural diagram of a battery cell according to some embodiments of the present application;

FIG. 5 is a schematic structural diagram of another battery cell according to some embodiments of the present application;

FIG. 6 is a schematic structural diagram of a battery cell according to some other embodiments of the present application;

FIG. 7 is a top view of a battery cell according to some embodiments of the present application; and

FIG. 8 is a plan view of a battery cell according to some embodiments of the present application.

Description of the reference numerals:

1000: vehicle;
100: battery; 200: controller; 300: motor;
10: case body; 11: first part; 12: second part;
20: battery cell; 21: end cover; 211: electrode terminal; 22: shell body; 23: electrode body; 24: tab; 241: first side edge; 242: second side edge; 243: target tab; 244: reference tab; 245: first tab; 246: second tab; 231: first electrode plate; 232: second electrode plate; 233: separator; 2331: planar portion; 2332: bent portion.

DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediary", "communication between interiors of two elements", or "interaction between two elements". For those of ordinary skill in the art, the specific meanings of the above terms in the embodiments disclosed in the present application can be interpreted according to the specific condition.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

In current batteries, the separator is superior to the anode electrode plate in both its width direction and length direction, allowing for insulation between the anode electrode plate and the cathode electrode plate. The anode electrode plate is superior to the cathode electrode plate in its width direction and length direction, such that the safety risk caused by the lithium plating phenomenon appearing on the surface of the anode electrode plate due to the fact that the lithium ions cannot be completely inserted into the active material of the anode electrode plate as excessive lithium ions are separated from the active material of the cathode electrode plate in the charging process can be avoided to a certain extent.

Along with the charge-discharge cycle of the battery, ions are embedded into or removed from the positive electrode active substance and the negative electrode active substance, such that the battery cell may bulge, namely the anode electrode plate and the cathode electrode plate expand outwards. The expansion of the electrode plates has adverse effects on the performance and the service life of the battery, and the expansion of the electrode plates may cause the tabs to be pulled, resulting in tearing of the tabs and the like.

In order to solve the problem that the expansion of the electrode plates influences the battery safety performance, the tabs may be designed to be in a relaxed state before and after the electrode body expands, thereby avoiding the problem that the tabs are possibly pulled and torn due to the fact that the electrode body expands to pull the tab to a certain extent, and thus improving the reliability of the battery cell.

The battery cell disclosed in the embodiments of the present application can be used in, but is not limited to be used in, electric devices such as vehicles, ships, or aircrafts. The battery cell, the battery, or the like disclosed in the present application may be used for composing the power system of the electric device. This helps to reduce the probability of the tearing of the tabs and improve the reliability of the battery cell.

The embodiments of the present application provide an electric device using a battery as a power source. The electric device may be, but not limited to, a mobile phone, a tablet, a laptop computer, an electric toy, an electric tool, an electric bicycle, an electric vehicle, a ship, a spacecraft, and the like. Where, the electric toy may include a stationary or mobile electric toy, such as a game console, an electric car toy, an electric ship toy, and an electric airplane toy, and the spacecraft may include an airplane, a rocket, a space shuttle, a spaceship, and the like.

For the convenience of description, an embodiment of the present application in which a vehicle 1000 is taken as the example of the electric device is used for description.

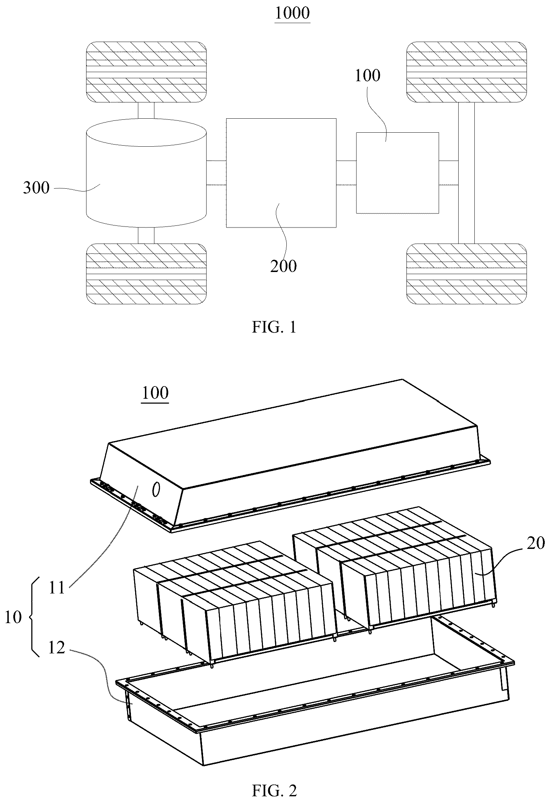

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be a pure electric vehicle, a hybrid vehicle, an extended-range vehicle, or the like. A battery 100 is arranged inside the vehicle 1000, and the battery 100 may be arranged at a bottom, a head, or a tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is used for controlling the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 according to some embodiments of the present application. The battery 100 includes a case body 10 and a battery cell 20. The battery cell 20 is accommodated in the case body 10. The case body 10 is configured to provide an accommodating space for the battery cell 20, and the case body 10 may have a variety of structures. In some embodiments, the case body 10 may include a first part 11 and a second part 12. The first part 11 and the second part 12 are mutually lidded onto each other, and the first part 11 and the second part 12 jointly define an accommodating space for accommodating the battery cells 20. The second part 12 may be a hollow structure with one end open, and the first part 11 may be a plate-like structure. The first part 11 is lidded onto the open side of the second part 12, such that the first part 11 and the second part 12 jointly define the accommodating space. The first part 11 and the second part 12 may also each be a hollow structure with one side open, and the open side of the first part 11 is lidded onto the open side of the second part 12. Certainly, the case body 10 formed by the first part 11 and the second part 12 may be in various shapes such as cylindrical and rectangular parallelepiped.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case body 10. Certainly, it may be that in the battery 100, the plurality of battery cells 20 are first connected in series, in parallel, or in series-parallel to form battery modules, and then the plurality of battery cell modules are connected in series, in parallel, or in series-parallel to form a whole and accommodated in the case body 10. The battery 100 may further include other structures. For example, the battery 100 may further include a busbar component for achieving electrical connection between the plurality of battery cells 20.

Each battery cell 20 may be a secondary battery or a primary battery; it may also be a lithiumsulfur battery, a sodium-ion battery, or a magnesium-ion battery, but is not limited thereto. The battery cell 20 may be cylindrical, flat, rectangular parallelepiped, or in other shapes.

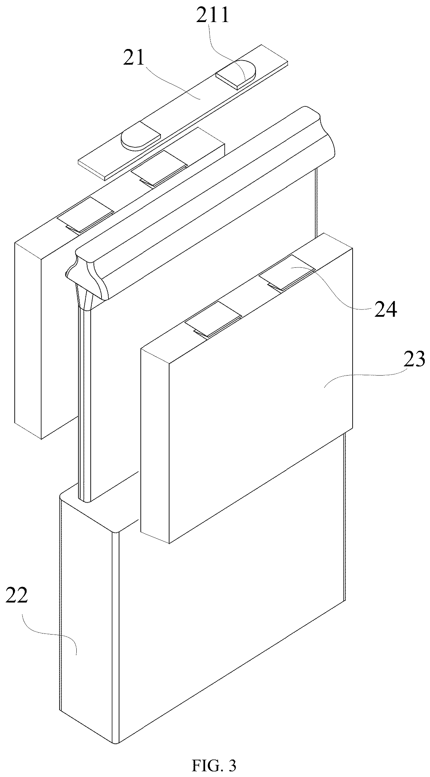

Referring to FIG. 3, FIG. 3 is a schematic diagram of an exploded structure of a battery cell 20 according to some embodiments of the present application. The battery cell 20 refers to the smallest unit forming a battery. As shown in FIG. 3, the battery cell 20 includes an end cover 21, a shell body 22, electrode bodies 23, and other functional components.

The end cover 21 is a component that is lidded onto the opening of the shell body 22 to isolate the internal environment of the battery cell 20 from the external environment. Without limitation, the shape of the end cover 21 may be adapted to the shape of the shell body 22 to match the shell body 22. Illustratively, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components, such as electrode terminals 211, may be arranged on the end cover 21. The electrode terminals 211 may be configured to be electrically connected with the electrode bodies 23 for outputting or inputting electric energy of the battery cell 20. In some embodiments, the end cover 21 may also be provided with a pressure relief mechanism for releasing the internal pressure when the internal pressure or temperature of the battery cell 20 reaches a threshold. The end cover 21 may also be made of a variety of materials, such as copper, iron, aluminum, stainless steel, aluminum alloy, and plastic, which is not specifically limited in the embodiments of the present application. In some embodiments, an insulating member may be arranged on the inner side of the end cover 21, and the insulating member may be configured to isolate an electrical connection component in the shell body 22 from the end cover 21 to reduce the risk of a short circuit. Illustratively, the insulating member may be made of plastic, rubber, or the like.

The shell body 22 is a component configured to form the internal environment of the battery cell 20 in combination with the end cover 21. The formed internal environment may be used to accommodate the electrode bodies 23, electrolyte, and other components. The shell body 22 and the end cover 21 may be independent components. An opening may be formed in the shell body 22, and the end cover 21 is lidded onto the opening to form the internal environment of the battery cell 20. Without limitation, the end cover 21 and the shell body 22 may be integrated. In some embodiments, the end cover 21 and the shell body 22 may form a common connection surface before other components are placed in the shell body, and when the interior of the shell body 22 needs to be encapsulated, the end cover 21 is lidded onto the shell body 22. The shell body 22 may be in various shapes and dimensions, such as rectangular parallelepiped, cylindrical, and a hexagonal prism. Specifically, the shape of the shell body 22 may be determined based on the specific shape and dimension of the electrode bodies 23. The shell body 22 may be made of a plurality of materials, such as copper, iron, aluminum, stainless steel, aluminum alloy, and plastic, which is not specifically limited in the embodiments of the present application.

The electrode bodies 23 are components where electrochemical reactions occur in the battery cell 20. One or more electrode bodies 23 may be accommodated in the shell body 22. The electrode bodies 23 are mainly formed by winding or stacking anode electrode plates and cathode electrode plates, and separators are usually arranged between the anode electrode plates and the cathode electrode plates. The portions of the anode electrode plates and the cathode electrode plates that contain the active substance constitute the electrode bodies 23, and the portions of the anode electrode plates and the cathode electrode plates that do not contain the active substance each constitute tabs 24. The anode tab and the cathode tab may be located together at one end of the body part or separately at two ends of the body part. During charging and discharging of the battery, the anode active substance and the cathode active substance react with the electrolyte, and the tabs 24 are connected to the electrode terminals 211 to form a current circuit.

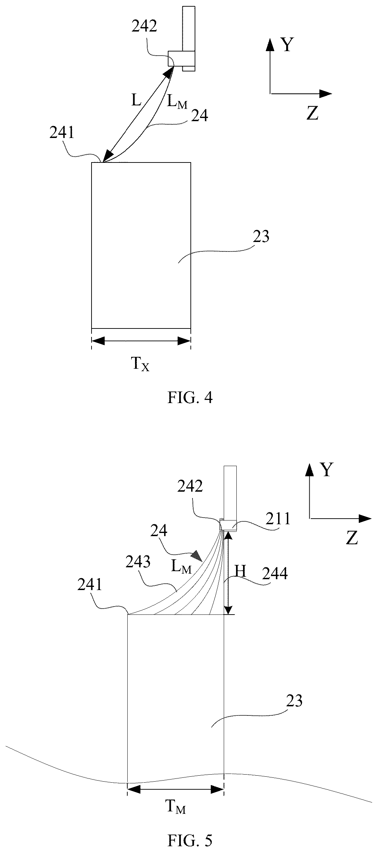

The embodiments of the present application provide a battery cell. FIG. 4 is a schematic structural diagram of a battery cell according to some embodiments of the present application. As shown in FIG. 4, the battery cell 20 includes an electrode body 23 and a tab 24, where the thickness Tx of the electrode body 23 is less than or equal to a preset thickness value T; the tab 24 is provided with a first side edge 241 and a second side edge 242 which are opposite to each other, and the first side edge 241 of the tab 24 is connected to the electrode body 23; where a first dimension $L_M$ of the tab 24 is greater than or equal to a distance L between the first side edge 241 of the tab 24 and the second side edge 242 of the tab 24, where the first dimension $L_M$ is an extension length of the tab 24 from the side where the first side edge 241 is located to the side where the second side edge 242 is located.

In the embodiments of the present application, the battery cell 20 may include a nickel-cadmium battery cell, a nickel-hydrogen battery cell, a lithium-ion battery cell, a secondary alkaline zinc-manganese battery cells, and the like. The battery cell 20 includes electrode bodies 23 and tabs 24. The thickness of the electrode body 23 is associated with the charging rate and the state of charge of the battery cell 20, and the thickness Tx of the electrode body 23 varies with the change of the charging rate and the state of charge of the battery cell 20. In general, when the charging rate is constant, the thickness Tx of the electrode body 23 tends to increase as the state of charge increases.

In the embodiments of the present application, the battery cell 20 may further include an end cover 21 and electrode terminals 211 arranged on the end cover 21. As shown in FIG. 4, the first side edge 241 of the tab 24 is connected to the electrode body 23, and the second side edge 242 of the tab 24 may be welded to the electrode terminal 211 by welding, so as to achieve electrical connection with the end cover 21, i.e., the second side edge 242 of the tab 24 is fixedly connected. The first side edge 241 of the tab 24 is the position where the first side edge 241 of the tab 24 is located when the first side edge 241 of the tab 24 is connected to the electrode body 23, the second side edge 242 of the tab 24 is the position where the second side edge 242 of the tab 24 is located when the second side edge 242 of the tab 24 is fixedly connected, the distance L between the first side edge 241 and the second side edge 242 of the tab 24 may vary with the change of the thickness Tx of the electrode body 23, and the distance L between the first side edge 241 and the second side edge 242 of the tab 24 tends to increase as the thickness $T_X$ of the electrode body 23 increases.

In the embodiments of the present application, the tabs 24 may include anode tabs and cathode tabs, where the anode tabs and the cathode tabs may be co-located at one end of the electrode body 23 or separately located at both ends of the electrode body 23, and meanwhile, the number of the tabs 24 may be multiple. The side where the first side edge 241 of the tab 24 is located is the position of the first side edge 241 of the tab 24 on the electrode body 23 when the tab 24 is connected to the electrode body 23, and the side where the second side edge 242 of the tab 24 is located is the position where the second side edge 242 of the tab 24 is fixedly connected. The first dimension of the tab 24 is the extension length of the tab 24 from the side where the first side edge 241 is located to the side where the second side edge 242 is located, namely, the actual length of the tab 24. The first dimension $L_M$ of the tab 24 is greater than or equal to the distance L between the first side edge 241 of the tab 24 and the second side edge 242 of the tab 24.

In the embodiments of the present application, the first dimension of the tab 24, namely the extension length of the tab 24 from the side where the first side edge 241 is located to the side where the second side edge 242 is located, is greater than or equal to the distance L between the first side edge 241 and the second side edge 242 of the tab 24, such that the tab 24 is in a relaxed state before and after the electrode body 23 expands, and thus the problem that the tab 24 is possibly pulled and torn due to the fact that the electrode body 23 expands to pull the tab 24 is avoided to a certain extent, thereby improving the reliability of the battery cell 20.

In the embodiments of the present application, when the thickness Tx of the electrode body 23 is less than or equal to the preset thickness value T, the first dimension $L_M$ of the tab 24 is greater than or equal to the distance L between the first side edge 241 of the tab 24 and the second side edge 242 of the tab 24.

According to some embodiments of the present application, FIG. 5 is a schematic structural diagram of another battery cell according to some embodiments of the present application. As shown in FIG. 5, as shown in FIG. 5, the battery cell 20 includes a plurality of tabs 24, the plurality of tabs 24 are located at the same end of the electrode body 23 and are disposed along a thickness direction Z of the electrode body 23, and the second side edges of the plurality of tabs 24 are connected.

In the embodiments of the present application, the battery cell 20 includes a plurality of tabs 24, the plurality of tabs 24 may be anode tabs or cathode tabs, and the plurality of tabs 24 are located at the same end of the electrode body 23. For example, when the electrode cell is shaped as a rectangular parallelepiped, the plurality of tabs 24 are located at the same end of the rectangular parallelepiped along the length direction thereof. The specific number of the plurality of tabs 24 is not particularly limited in the embodiments of the present application.

The plurality of tabs 24 are disposed along the thickness direction Z of the electrode body 23, the first side edges 241 of any two adjacent tabs 24 in the plurality of tabs 24 have the same or different distances in the thickness direction Z of the electrode body 23, and the second side edges 242 of the plurality of tabs 24 are fixedly connected. The first dimension $L_M$ of any one tab 24 of the plurality of tabs 24 is greater than or equal to the distance L between the first side edge 241 of the tab 24 and the second side edge 242 of the tab 24.

In the embodiments of the present application, each tab 24 of the plurality of tabs 24 is in a relaxed state, such that the possibility that each tab 24 is pulled can be reduced, the problem that the tab 24 is possibly pulled and torn due to the fact that the electrode body 23 expands to pull the tab 24 can be avoided to a certain extent, and thus the reliability of the battery cell 20 is improved.

According to some embodiments of the present application, as shown in FIG. 5, the plurality of tabs 24 include a target tab 243, a first dimension $L_M$ of the target tab 243 is a maximum value of the first dimensions $L_M$ of the plurality of tabs 24, and a distance $T_M$ between a first side edge 241 of the target tab 243 and a second side edge 242 of the target tab 243 in the thickness direction Z of the electrode body 23, the first dimension $L_M$ of the target tab 243, and a distance H between the second side edge of the target tab 243 and the electrode body 23 satisfy a preset relationship, such that the first dimension $L_M$ is greater than or equal to the distance between the first side edge 241 of the target tab 243 and the second side edge 242 of the target tab 243.

In the embodiments of the present application, the first dimension $L_M$ of the target tab 243 is the maximum value of the first dimensions $L_M$ of the plurality of tabs 24, and the target tab 243 is the tab 24 with the farthest distance L between the first side edge 241 and the second side edge 242 among the plurality of tabs 24.

Illustratively, as shown in FIG. 5, when the second side edges 242 of the plurality of tabs 24 are located on one side of the electrode body 23 in the thickness direction Z, the target tab 243 is the tab 24 on the side opposite to the second side edge 242 of the tab 24 in the thickness direction Z of the electrode body 23.

In the embodiments of the present application, as shown in FIG. 5, the distance between the first side edge 241 of the target tab 243 and the second side edge 242 of the target tab 243 in the thickness direction Z of the electrode body 23 is $T_M$, the first dimension of the target tab 243 is $L_M$, and the distance between the second side edge 242 of the target tab 243 and the electrode body 23 is H.

In the embodiments of the present application, by setting the target tab 243 farthest from the electrode terminal 211 in the battery cell 20 to be in a relaxed state, other tabs 24 can also be in a relaxed state, such that when the battery cell 20 expands, the possibility that the tabs 24 in the battery cell 20 are pulled and torn can be reduced, the problem that the tabs 24 are possibly pulled and torn due to the fact that the electrode body 23 expands to pull the tab 24 can be avoided to a certain extent, and thus the reliability of the battery cell 20 is improved.

According to some embodiments of the present application, the preset relationship includes $(H+T_M)^2 > L_M^2$.

In the embodiments of the present application, the square of the sum of the distance H between the second side edge 242 of the target tab 243 and the electrode body 23 and the distance $T_M$ between the first side edge 241 of the target tab 243 and the second side edge 242 of the target tab 243 in the thickness direction Z of the electrode body 23 is set to be greater than the square of the first dimension $L_M$ of the target tab 243, which can not only reduce the possibility that the target tab 243 in the battery cell 20 is pulled and torn, but also prevent the oversized first dimension $L_M$ of the target tab 243 that can lead to waste or interfere with the connection between the tab 24 and the electrode body 23.

According to some embodiments of the present application, the preset relationship includes $L_M^2 > H^2 + T_M^2$.

In the embodiments of the present application, by setting the sum of the square of the distance H between the second side edge 242 of the target tab 243 and the electrode body 23 and the square of the distance $T_M$ between the first side edge 241 of the target tab 243 and the second side edge 242 of the target tab 243 in the thickness direction Z of the electrode body 23 to be less than the square of the distance between the first side edge 241 of the target tab 243 and the second side edge 242 of the target tab 243, the first dimension $L_M$ of the target tab 243 can be greater than or equal to the distance between the first side edge 241 of the target tab 243 and the second side edge 242 of the target tab 243, such that the possibility that the target tab 243 in the battery cell 20 is pulled and torn can be reduced.

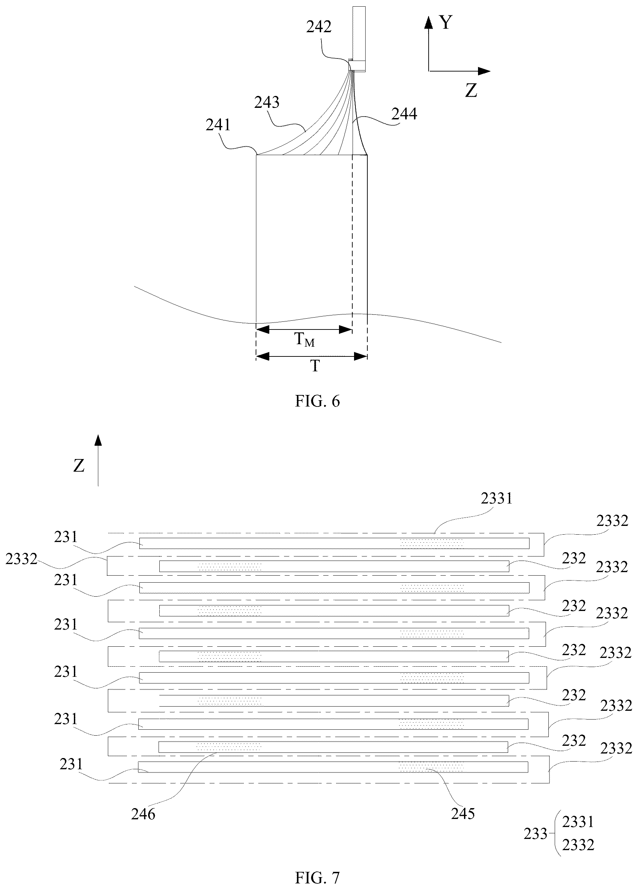

According to some embodiments of the present application, FIG. 6 is a schematic structural diagram of a battery cell according to some other embodiments of the present application. As shown in FIG. 6, the plurality of tabs 24 further include a reference tab 244, a first dimension of the reference tab 244 is a minimum value of the first dimensions of the plurality of tabs 24, the preset thickness value of the electrode body 23 is T, the electrode body includes N tabs, and $T_M = (M/N) \times T$ if (M-2) tabs are spaced between the target tab and the reference tab; where M is a positive integer greater than 2, and N is a positive integer greater than or equal to M.

In the embodiments of the present application, the electrode body 23 includes N tabs, and the first dimension of the reference tab 244 is the minimum value of the first dimensions of the plurality of tabs 24, that is, the reference tab 244 is the tab 24 with the shortest distance between the first side edge 241 and the second side edge 242 among the plurality of tabs 24. The first dimension of the target tab 243 is the maximum value of the first dimensions of the plurality of tabs 24, and the target tab 243 is the tab 24 with the farthest distance between the first side edge 241 and the second side edge 242 among the plurality of tabs 24. The target tab 243 and the reference tab 244 are spaced by (M-2) tabs, and the reference tab 244 is the $M^{th}$ tab counted from the side where the target tab 243 is located.

As shown in FIG. 6, illustratively, the electrode body 23 includes 7 tabs, the target tab 243 is the first tab, the target tab 243 and the reference tab 244 are spaced by 4 tabs, and the reference tab 244 is the sixth tab.

In the embodiments of the present application, when the preset thickness value of the electrode body 23 is T, the distance $T_M$ between the first side edge 241 of the target tab 243 and the second side edge 242 of the target tab 243 in the thickness direction Z of the electrode body 23 is equal to $(M/N) \times T$. As shown in FIG. 6, illustratively, the distance $T_M$ between the first side edge 241 of the target tab 243 and the second side edge 242 of the target tab 243 in the thickness direction Z of the electrode body 23 is equal to $(6/7) \times (T)$.

In the embodiments of the present application, the distance $T_M$ of the second side edge 242 of the target tab 243 in the thickness direction Z of the electrode body 23 is calculated based on the tab 24 with the smallest first dimension among the plurality of tabs 24 as the reference tab 244 and the number of tabs 24 spaced between the reference tab 244 and the target tab 243 as well as the total number of tabs 24 included in the electrode body 23, such that the determination result of the distance $T_M$ between the first side edge 241 of the target tab 243 and the second side edge 242 of the target tab 243 in the thickness direction Z of the electrode body 23 is simpler and more accurate.

According to some embodiments of the present application, as shown in FIG. 5, the target tab 243 and the reference tab 244 are located on opposite sides of the electrode body 23 in the thickness direction Z.

In the embodiments of the present application, by arranging the target tab 243 and the reference tab 244 on the opposite sides of the electrode body 23 in the thickness direction Z, the structure of the battery cell 20 can be simpler, and it is easier to realize in process manufacturing, which improves the manufacturing efficiency and reduces the manufacturing cost to a certain extent.

According to some embodiments of the present application, the preset thickness value is the thickness of the electrode body 23 when the battery cell 20 is charged to a state of charge greater than or equal to 95% at a preset charging rate.

In the embodiments of the present application, the charging rate is a measure of charging speed, and refers to a current value required to charge the battery cell 20 to its rated capacity within a specified time, which is equal in value to a multiple of the rated capacity of the battery cell 20, i.e., "charge current/rated capacity of battery cell = charging rate". The state of charge is the ratio of the rated capacity of a battery cell to its capacity in its fully charged state, usually expressed as a percentage.

Illustratively, the preset charging rate is $\frac{1}{3}C$.

In the embodiments of the present application, by setting the preset thickness value as the thickness of the electrode body 23 when the battery cell 20 is charged to the state of charge greater than or equal to 95% at a preset charging rate, the state of charge of the electrode body 23 can be closer to the saturation state under the condition that the charging capacity, charging efficiency, charging reliability and battery lifespan satisfy the requirements for full charge, such that the preset thickness T can be closer to the maximum value, and the tab 24 is not easy to be pulled and torn under the condition that the battery cell is at the preset thickness T, avoiding the problem that the tab 24 is possibly pulled and torn due to the fact that the electrode body 23 expands to pull the tab 24 to a certain extent.

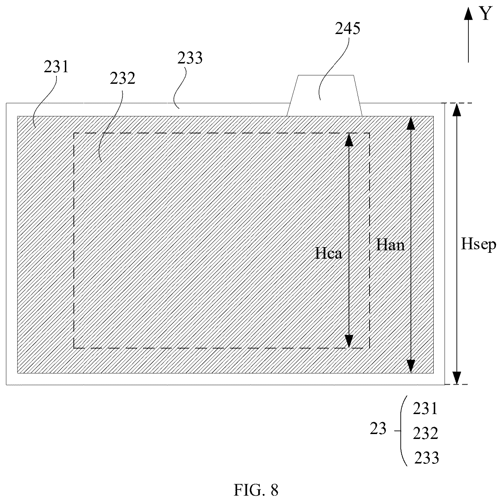

FIG. 7 is a top view of a battery cell according to some embodiments of the present application, and FIG. 8 is a plan view of a battery cell according to some embodiments of the present application. As shown in FIGs. 7 and 8, the electrode body 23 includes a plurality of first electrode plates 231, a plurality of second electrode plates 232, and separators 233. A first height value Han of the first electrode plate 231 in a height direction Y of the electrode body 23 is less than or equal to a preset height value; the plurality of second electrode plates 232 and the plurality of first electrode plates 231 are alternately laminated along the thickness direction Z of the electrode body 23, and a height of the second electrode plate 232 in the height direction Y of the electrode body 23 is a second height value Hca; each separator 233 is located between any adjacent first electrode plate 231 and second electrode plate 232, and a height of the separator 233 in the height direction Y of the electrode body 23 is a third height value Hsep; where the third height value Hsep of the separator 233 is greater than the first height value Han, the first height value Han is greater than the second height value Hca of the second electrode plate 232, a difference value between the third height value Hsep and the first height value Han is a first difference value (Hsep-Han), the first difference value (Hsep-Han) is greater than a preset expansion threshold, and the preset expansion threshold is positively correlated with a silicon content of the first electrode plate 231.

In the embodiments of the present application, the electrode body 23 is a laminated structure, the electrode body 23 includes a plurality of first electrode plates 231, a plurality of second electrode plates 232, and separators 233, where the plurality of first electrode plates 231 and the plurality of second electrode plates 232 are alternately laminated in the thickness direction Z of the electrode body 23, the separators 233 may be continuous, and one separator 233 included in the electrode body 23 is located between any adjacent first electrode plate 231 and second electrode plate 232. Or, the separators 233 are discontinuous, a plurality of separators 233 are included in the electrode body 23, and each separator 233 is located between adjacent first electrode plate 231 and second electrode plate 232.

In some embodiments of the present application, the first electrode plate 231 is an anode electrode plate, and the second electrode plate 232 is a cathode electrode plate. The battery cell 20 mainly operates by means of metal ions moving between the first electrode plates 231 and the second electrode plates 232. The first electrode plate 231 includes a first current collector and a first active substance layer, where the first active substance layer coats the surface of the first current collector, and the first active substance includes silicon. The second electrode plate 232 includes a second current collector and a second active substance layer, where the second active substance layer coats the surface of the second current collector.

In the embodiments of the present application, the first height value Han of the first electrode plate 231 in the height direction Y of the electrode body 23 varies with the change of the state of charge of the battery cell 20, the first height value Han of the first electrode plate 231 in the height direction Y of the electrode body 23 may increase with the increase of the state of charge of the battery cell 20, and the first height value Han of the first electrode plate 231 in the height direction Y of the electrode body 23 is less than or equal to the preset height value. The height of the second electrode plate 232 in the height direction Y of the electrode body 23 is the second height value Hca, and the height of the separator 233 in the height direction Y of the electrode body 23 is the third height value Hsep.

In the embodiments of the present application, in order to prevent lithium dendrite from being generated inside the electrode body 23 to some extent in the related art, the separator 233 is pierced, causing short circuit in the battery, thus causing thermal runaway. The first height value Han of the first electrode plate 231 is greater than the second height value Hca of the second electrode plate 232. In order to prevent the first height value Han of the first electrode plate 231 from exceeding the separator 233 and being inserted into the tab of the second electrode plate 232, the third height value Hsep of the separator 233 is greater than the first height value Han of the first electrode plate 231, and the first electrode plate 231 will expand during the charging process because the active substance of the first electrode plate 231 contains silicon during the charging process of the battery cell 20. The expansion value of the first height value Han may reach the expansion threshold, and the expansion threshold is positively correlated with the silicon content of the first electrode plate 231, and the first difference value (Hsep-Han) between the third height value Hsep and the first height value Han is greater than the preset expansion threshold.

In the embodiments of the present application, the preset expansion threshold is positively correlated with the silicon content of the first electrode plate 231, and illustratively, the preset expansion threshold may be (Han×silicon content/5), where Han is the first height value of the first electrode plate 231 in the height direction Y of the electrode body 23, and the silicon content is the silicon content of the first electrode plate 231.

In the embodiments of the present application, by setting the third height value Hsep of the separator 233 to be greater than the first height value Han of the first electrode plate 231, and the first difference value (Hsep-Han) between the third height value Hsep of the separator 233 and the first height value Han of the first electrode plate 231 to be greater than a preset expansion threshold, the first height value Han of the first electrode plate 231 can still not exceed the third height value Hsep of the separator 233 after expansion, and meanwhile, the first height value Han of the first electrode plate 231 is greater than the second height value Hca of the second electrode plate 232, thereby improving the reliability of the battery cell 20.

According to some embodiments, a difference value between the first difference value (Hsep-Han) and the preset expansion threshold (Han × silicon content/5) is a second difference value (Hsep-Han - Han×silicon content/5), a difference value between the first height value Han and the second height value Hca is a third difference value (Han-Hca), and the second difference value (Hsep-Han - Han×silicon content/5) is greater than the third difference value (Han-Hca).

In the embodiments of the present application, the difference value between the first difference value (Hsep-Han) and the preset expansion threshold (Han×silicon content/5) is the second difference value (Hsep-Han-Han×silicon content/5), the difference value between the first height value Han and the second height value Hca is the third difference value (Han-Hca), and the second difference value (Hsep-Han - Han×silicon content/5) is greater than the third difference value (Han-Hca), i.e., (Hsep-Han > Han-Hca + Han×silicon content/5), which ensures that the first height value (Han+Han×silicon content/5) of the first electrode plate 231 after expansion is less than the third height value Hsep of the separator 233, such that the first height value Han of the first electrode plate 231 does not exceed the third height value Hsep of the separator 233, and that the different value between the third height value Hsep of the separator 233 and the first height value (Han+Han×silicon content/5) of the first electrode plate 231 after expansion is greater than the third different value (Han-Hca) between the first height value Han and the second height value Hca, thereby improving the reliability of the battery cell 20.

According to some embodiments, the first difference value (Hsep-Han) is less than the sum of the preset thickness value T of the electrode body 23 and the distance H between the second side edge and the electrode body 23.

In the embodiments of the present application, the preset thickness value of the electrode body 23 is T, the distance between the second side edge 242 and the electrode body 23 is H, and the sum of the preset thickness value T of the electrode body 23 and the distance between the second side edge 242 and the electrode body 23 is (T+H). The first difference value between the third height value Hsep of the separator 233 and the first height value Han of the first electrode plate 231 is (Hsep-Han). By making the first difference value (Hsep-Han) less than the sum (T+H) of the preset thickness value T of the electrode body 23 and the distance between the second side edge 242 and the electrode body 23, i.e., (T+H > Hsep-Han), the first electrode plate 231 can satisfy the expansion condition and reduce waste.

According to some embodiments, the first height value Han of the first electrode plate 231 is greater than or equal to 100 millimeters.

In the embodiments of the present application, when the first height value Han of the first electrode plate 231 is greater than or equal to 100 millimeters, the expansion of the first electrode plate 231 in the height direction Y of the electrode body 23 can be more obvious, so it is necessary to set the first height value Han of the first electrode plate 231, which can reduce unnecessary restrictions on the first height value Han of the first electrode plate 231.

According to some embodiments, the first height value Han is less than or equal to a set height value, where the set height value is negatively correlated with the silicon content of the first electrode plate 231.

In the embodiments of the present application, the set height value may be a maximum value of the first height value Han of the first electrode plate 231, and when the silicon content of the first electrode plate 231 is higher, the expansion, namely the first height value Han, of the first electrode plate 231 in the height direction Y of the electrode body 23 during the charging of the battery cell 20 is larger, such that the set height value is negatively correlated with the silicon content of the first electrode plate 231. By limiting the first height value Han to be less than or equal to the set height value, the height of the first electrode plate 231 in the height direction Y of the electrode body 23 can be in a proper range, and the height design of the electrode plates in the battery cell 20 can be simplified.

According to some embodiments, the set height value is a ratio of 200 millimeters to the silicon content of the first electrode plate 231.

In the embodiments of the present application, by defining the set height value as the ratio of 200 millimeters to the silicon content of the first electrode plate 231, the first height value Han of the first electrode plate 231 being excessively large in the height direction Y of the electrode body 23 can be avoided to some extent, thereby improving the reliability of the battery cell 20.

According to some embodiments, the silicon content of the first electrode plate 231 is greater than or equal to 15% and less than or equal to 100%.

In the embodiments of the present application, when the silicon content of the first electrode plate 231 is less than 15%, the energy density of the battery cell 20 may be too low. The silicon content of the first electrode plate 231 is greater than or equal to 15%, which can reduce the cost of the battery cell 20, enhance the energy density of the battery cell 20, and increase the charging speed of the battery cell 20.

According to some embodiments, the silicon content of the first electrode plate 231 is greater than or equal to 30% and less than or equal to 55%.

In the embodiments of the present application, when the silicon content of the first electrode plate 231 is greater than 55%, the expansion may be too large, and when the silicon content of the first electrode plate 231 is less than 30%, the energy density of the battery cell 20 may be too low, and lithium may be separated out. The silicon content in this range can avoid the over-expansion of the first electrode plate 231 to a certain extent and reduce the lithium plating of the battery cell 20.

According to some embodiments, as shown in FIG. 7, in the thickness direction Z of the electrode body 23, the separators 233 are bent and extended to form a plurality of planar portions 2331 and a plurality of bent portions 2332, each planar portion 2331 is located between the adjacent first electrode plate 231 and second electrode plate 232, and each bent portion 2332 is located between two adjacent planar portions 2331.

Illustratively, the electrode body 23 is a "Z"-shaped laminated plate.

In the embodiments of the present application, the first electrode plate 231 and the second electrode plate 232 are located in a space formed by two planar portions 2331 and the bent portion 2332. When expanding, the first electrode plate 231 and the second electrode plate 232 may expand in a direction far away from the bent portion 2332, such that the probability that the first electrode plate 231 and the second electrode plate 232 contact the separator 233 to cause the first electrode plate 231 and the second electrode plate 232 to bend and the probability that the first electrode plate 231 and the second electrode plate 232 cause the separator 233 to tear can be reduced, thereby improving the reliability of the battery cell 20.

According to some embodiments, as shown in FIG. 7, the plurality of tabs 24 include first tabs 245, where each first tab 245 is connected to the first electrode plate 231, and the first tab 245 is located on one side of the first electrode plate 231 proximal to the bent portion 2332 corresponding to the position of the first electrode plate 231.

In the embodiments of the present application, the number of the first tabs 245 is the same as the number of the first electrode plates 231, and the first tab 245 is located on one side of the first electrode plate 231 proximal to the bent portion corresponding to the position of the first electrode plate 231, which can make the first tab 245 expand along the opening opposite to the bent portion 2332 when expanding, thus reducing the possibility that the first tab 245 expands toward the bent portion 2332 of the separator 233 to puncture the bent portion 2332, and further improving the performance reliability of the battery cell 20.

According to some embodiments, as shown in FIG. 7, the plurality of tabs 24 include second tabs 246, where each second tab 246 is connected to the second electrode plate 232, and the second tab 246 is located on one side of the second electrode plate 232 proximal to the bent portion corresponding to the position of the second electrode plate 232.

In the embodiments of the present application, the number of the second tabs 246 is the same as the number of the second electrode plates 232, and the second tab 246 is located on one side of the second electrode plate 232 proximal to the bent portion corresponding to the position of the second electrode plate 232, which can make the second tab 246 expand along the opening opposite to the bent portion 2332 when expanding, thus reducing the possibility that the second tab 246 expands toward the bent portion 2332 proximal to the separator 233 to puncture the bent portion 2332, and further improving the performance reliability of the battery cell 20.

According to some embodiments, the preset height value is a height of the first electrode plate 231 when the battery cell 20 is charged to the state of charge greater than or equal to 95% at a preset charging rate.

Illustratively, the preset charging rate is $\frac{1}{3}C$.

In the embodiments of the present application, by setting the present height value as the thickness of the electrode body 23 when the battery cell 20 is charged to the state of charge greater than or equal to 95% at a preset charging rate, the state of charge of the electrode body 23 can be closer to the saturation state under the condition that the charging capacity, charging efficiency, charging reliability and battery lifespan satisfy the requirements for full charge, such that the preset height value can be closer to the maximum value, and thus the first height value Han of the first electrode plate 231 after expansion will not exceed the third height value Hsep of the separator 233.

The embodiments of the present application further provide a battery. The battery includes the battery cell 20 in any one of the above embodiments.

In the embodiments of the present application, the battery may be applied to, but not limited to, a mobile phone, a tablet, a laptop computer, an electric toy, an electric tool, an electric bicycle, an electric vehicle, a ship, a spacecraft, and the like. Where, the electric toy may include a stationary or mobile electric toy, such as a game console, an electric car toy, an electric ship toy, and an electric airplane toy, and the spacecraft may include an airplane, a rocket, a space shuttle, a spaceship, and the like.

By adopting the battery cell 20 in the embodiments of the present application, the problem that the tab 24 is possibly pulled and torn due to the fact that the electrode body 23 expands to pull the tab 24 is avoided to a certain extent, and thus the reliability of the battery cell 20 is improved.

The embodiments of the present application further provide an electric device. The electric device includes the battery in any one of the above embodiments, the battery being configured to provide electric energy.

In the embodiments of the present application, the electric device may be, but not limited to, a mobile phone, a tablet, a laptop computer, an electric toy, an electric tool, an electric bicycle, an electric vehicle, a ship, a spacecraft, and the like. Where, the electric toy may include a stationary or mobile electric toy, such as a game console, an electric car toy, an electric ship toy, and an electric airplane toy, and the spacecraft may include an airplane, a rocket, a space shuttle, a spaceship, and the like.

By adopting the battery in the embodiments of the present application, the problem that the tab 24 is possibly pulled and torn due to the fact that the electrode body 23 expands to pull the tab 24 is avoided to a certain extent, and thus the reliability of the electric device is improved.

The technical solutions of the present application are explained below by means of an exemplary embodiment, as shown in FIGs. 1 to 8,

The battery cell 20 includes electrode bodies 23 and a plurality of tabs 24, where the thickness of the electrode body 23 is less than or equal to the thickness of the electrode body 23 when the battery cell is charged to the state of charge greater than or equal to 95% at a preset charging rate; the plurality of tabs 24 are located at the same end of the electrode body 23 and are disposed along a thickness direction Z of the electrode body 23; the tab 24 is provided with a first side edge 241 and a second side edge 242 which are opposite to each other, and the first side edge 241 of the tab 24 is connected to the electrode body 23; where a first dimension of the tab 24 is greater than or equal to a distance between the first side edge 241 of the tab 24 and the second side edge 242 of the tab 24, where the first dimension is an extension length of the tab 24 from the side where the first side edge 241 is located to the side where the second side edge 242 is located.

The plurality of tabs 24 include a target tab 243, a first dimension of the target tab 243 is a maximum value of the first dimensions of the plurality of tabs 24, a distance $T_M$ between a first side edge 241 of the target tab 243 and a second side edge 242 of the target tab 243 in the thickness direction Z of the electrode body 23, the first dimension $L_M$ of the target tab 243, and a distance H between the second side edge of the target tab 243 and the electrode body 23 satisfy preset relationships $(H+T_M)^2 > L_M^2$ and $L_M^2 > H^2+T_M^2$, such that the first dimension $L_M$ is greater than or equal to the distance between the first side edge 241 of the target tab 243 and the second side edge 242 of the target tab 243.

The plurality of tabs 24 further include a reference tab 244, a first dimension of the reference tab 244 is a minimum value of the first dimensions of the plurality of tabs 24, the preset thickness value of the electrode body 23 is T, the electrode body includes N tabs, and $T_M = (M/N) \times T$ if (M-2) tabs are spaced between the target tab and the reference tab; where M is a positive integer greater than 2, and N is a positive integer greater than or equal to M. The target tab 243 and the reference tab 244 are located on opposite sides of the electrode body 23 in the thickness direction Z.

The electrode body 23 includes a plurality of first electrode plates 231, a plurality of second electrode plates 232 and separators 233. A first height value Han of the first electrode plate 231 in the height direction Z of the electrode body 23 is less than or equal to the height of the first electrode plate when the battery cell 20 is charged to a state of charge greater than or equal to 95% at a preset charging rate; the plurality of second electrode plates 232 and the plurality of first electrode plates 231 are alternately laminated along the thickness direction Z of the electrode body 23, and the height of the second electrode plate 232 in the height direction Y of the electrode body 23 is a second height value Hca; each separator 233 is located between any adjacent first electrode plate 231 and second electrode plate 232, and the height of the separator 233 in the height direction Y of the electrode body 23 is a third height value Hsep; where the third height value Hsep of the separator 233 is greater than the first height value Han, the first height value Han is greater than the second height value Hca of the second electrode plate 232, and a first difference value (Hsep-Han) between the third height value Hsep and the first height value Han is greater than a preset expansion threshold (Han×silicon content/5).

A second difference value between the first difference value (Hsep-Han) and the preset expansion threshold (Han×silicon content/5) is greater than a third difference value between the first height value Han and the second height value Hea. The first difference value (Hsep-Han) is less than the sum of the preset thickness value T of the electrode body 23 and the distance $L_M$ between the second side edge and the electrode body 23.

The first height value Han of the first electrode plate 231 is greater than or equal to 100 millimeters and less than or equal to a ratio of 200 millimeters to the silicon content of the first electrode plate 231. The silicon content of the first electrode plate 231 is greater than or equal to 30% and less than or equal to 55%.

In the thickness direction Z of the electrode body 23, the separators 233 are bent and extended to form a plurality of planar portions 2331 and a plurality of bent portions 2332, each planar portion 2331 is located between the adjacent first electrode plate 231 and second electrode plate 232, and each bent portion 2332 is located between two adjacent planar portions 2331.

The plurality of tabs 24 include first tabs 245 located on one side of the first electrode plates 231 proximal to the bent portions corresponding to the position of the first electrode plates 231, and the first tabs 245 are connected to the first electrode plates 231. The plurality of tabs 24 include second tabs 246 located on one side of the second electrode plates 232 proximal to the bent portions corresponding to the position of the second electrode plates 232, and the second tabs 246 are connected to the second electrode plates 232.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery cell, comprising:

   an electrode body, the thickness of the electrode body being less than or equal to a preset thickness value; and
   a tab, having a first side edge and a second side edge that are opposite to each other, the first side edge of the tab being connected to the electrode body,
   wherein a first dimension of the tab is greater than or equal to a distance between the first side edge of the tab and the second side edge of the tab, wherein the first dimension is an extension length of the tab from the side where the first side edge is located to the side where the second side edge is located.

2. The battery cell according to claim 1, wherein the battery cell comprises a plurality of tabs, the plurality of tabs are located at a same end of the electrode body and are disposed along a thickness direction of the electrode body, and the second side edges of the plurality of tabs are connected.

3. The battery cell according to claim 2, wherein the plurality of tabs comprise a target tab, a first dimension of the target tab is a maximum of the first dimensions of the plurality of tabs, and a distance, $T_M$, between a first side edge of the target tab and a second side edge of the target tab in the thickness direction of the electrode body, the first dimension, $L_M$, of the target tab, and a distance, H, between the second side edge of the target tab and the electrode body satisfy a preset relationship, such that the first dimension $L_M$ is greater than or equal to the distance between the first side edge of the target tab and the second side edge of the target tab.

4. The battery cell according to claim 3, wherein the preset relationship comprises $(H+T_M)^2 > L_M^2$.

5. The battery cell according to claim 3, wherein the preset relationship comprises $L_M^2 > H^2+T_M^2$.

6. The battery cell according to any one of claims 3 to 5, wherein the plurality of tabs further comprise a reference tab, a first dimension of the reference tab is a minimum of the first dimensions of the plurality of tabs, the preset thickness value of the electrode body is T, the electrode body comprises N tabs, and $T_M = (M/N) \times T$ if (M-2) tabs are located between the target tab and the reference tab,
where M is a positive integer greater than 2, and N is a positive integer greater than or equal to M.

7. The battery cell according to claim 6, wherein the target tab and the reference tab are located on opposite sides of the electrode body in the thickness direction.

8. The battery cell according to any one of claims 1 to 7, wherein the preset thickness value is the thickness of the electrode body when the battery cell is charged to a state of charge greater than or equal to 95% at a preset charging rate.

9. The battery cell according to any one of claims 1 to 8, wherein the electrode body comprises:

a plurality of first electrode plates, a first height value of the first electrode plate in a height direction of the electrode body being less than or equal to a preset height value;
a plurality of second electrode plates, the plurality of second electrode plates and the plurality of first electrode plates being alternately laminated along the thickness direction of the electrode body, and a height of the second electrode plate in the height direction of the electrode body being a second height value; and
separators, each separator being located between any adjacent first electrode plate and second electrode plate, and a height of the separator in the height direction of the electrode body being a third height value,
wherein the third height value of the separator is greater than the first height value, the first height value is greater than the second height value of the second electrode plate, a difference value between the third height value and the first height value is a first difference value, the first difference value is greater than a preset expansion threshold, and the preset expansion threshold is positively correlated with a silicon content of the first electrode plate.

10. The battery cell according to claim 9, wherein a difference value between the first difference value and the preset expansion threshold is a second difference value, a difference value between the first height value and the second height value is a third difference value, and the second difference value is greater than the third difference value.

11. The battery cell according to claim 9 or 10, wherein the first difference value is less than a sum of the preset thickness value of the electrode body and the distance between the second side edge and the electrode body.

12. The battery cell according to any one of claims 9 to 11, wherein the first height value of the first electrode plate is greater than or equal to 100 millimeters.

13. The battery cell according to any one of claims 9 to 12, wherein the first height value is less than or equal to a set height value, wherein the set height value is negatively correlated with the silicon content of the first electrode plate.

14. The battery cell according to claim 13, wherein the set height value is a ratio of 200 millimeters to the silicon content of the first electrode plate.

15. The battery cell according to any one of claims 9 to 14, wherein the silicon content of the first electrode plate is greater than or equal to 15% and less than or equal to 100%.

16. The battery cell according to claim 15, wherein the silicon content of the first electrode plate is greater than or equal to 30% and less than or equal to 55%.

17. The battery cell according to any one of claims 9 to 16, wherein in the thickness direction of the electrode body, the separators are bent and extended to form a plurality of planar portions and a plurality of bent portions, each planar portion is located between adjacent first electrode plate and second electrode plate, and each bent portion is located between two adjacent planar portions.

18. The battery cell according to claim 17, wherein the tab comprises a first tab, wherein the first tab is connected to a first electrode plate, and the first tab is located on one side of the first electrode plate

**EP 4 654 345 A1**

proximal to the bent portion corresponding to a position of the first electrode plate.

19. The battery cell according to claim 17 or 18, wherein the tab comprises a second tab, wherein the second tab is connected to a second electrode plate, and the second tab is located on one side of the second electrode plate proximal to the bent portion corresponding to a position of the first electrode plate.

20. The battery cell according to any one of claims 9 to 19, wherein the preset height value is a height of the first electrode plate when the battery cell is charged to a state of charge greater than or equal to 95% at a preset charging rate.

21. A battery, comprising the battery cell according to any one of claims 1 to 20.

22. An electric device, wherein the electric device comprises the battery according to claim 21, the battery being configured to provide electric energy.

1000

FIG. 1

100

FIG. 2

FIG. 3

FIG. 4

FIG. 5

FIG. 6

FIG. 7

FIG. 8

## INTERNATIONAL SEARCH REPORT

| International application No. |
|---|
| **PCT/CN2023/137495** |

| A. | CLASSIFICATION OF SUBJECT MATTER |
|---|---|

H01M50/172(2021.01)i;  H01M50/296(2021.01)i;  H01M50/531(2021.01)i

According to International Patent Classification (IPC) or to both national classification and IPC

| B. | FIELDS SEARCHED |
|---|---|

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

CNABS: CNTXT; ENTXT; ENTXTC; DWPI; CNKI: 电池, 极耳, 弯曲, 弯折, 弧度, 松弛, 冗余, 叠片, 层叠, 正极, 负极, 硅, Si, 隔膜, 隔板, battery, tab, bend, arc, relaxed, redundant, laminated, positive, negative, silicon, separator

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 218414893 U (CONTEMPORARY AMPEREX TECHNOLOGY CO., LTD.) 31 January 2023 (2023-01-31) description, paragraphs 64-136, and figures 1-14 | 1-8, 21-22 |
| Y | CN 218414893 U (CONTEMPORARY AMPEREX TECHNOLOGY CO., LTD.) 31 January 2023 (2023-01-31) description, paragraphs 64-136, and figures 1-14 | 9-20 |
| X | CN 113471637 A (POWERAMP TECHNOLOGY LIMITED) 01 October 2021 (2021-10-01) description, paragraphs 37-72, and figures 1-7 | 1-8, 21-22 |
| Y | CN 113471637 A (POWERAMP TECHNOLOGY LIMITED) 01 October 2021 (2021-10-01) description, paragraphs 37-72, and figures 1-7 | 9-20 |
| X | CN 115064843 A (NINGDE AMPEREX TECHNOLOGY LTD.) 16 September 2022 (2022-09-16) description, paragraphs 51-65, and figures 4-27 | 1-8, 21-22 |
| Y | CN 115064843 A (NINGDE AMPEREX TECHNOLOGY LTD.) 16 September 2022 (2022-09-16) description, paragraphs 51-65, and figures 4-27 | 9-20 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 January 2024** | **04 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/137495**

## C. DOCUMENTS CONSIDERED TO BE RELEVANT

| Category* | Citation of document, with indication, where appropriate, of the relevant passages | Relevant to claim No. |
|---|---|---|
| Y | CN 215896628 U (CONTEMPORARY AMPEREX TECHNOLOGY CO., LTD.) 22 February 2022 (2022-02-22) description, paragraphs 64-159, and figures 1-11 | 9-20 |
| A | CN 114204224 A (BYD CO., LTD.) 18 March 2022 (2022-03-18) entire document | 1-22 |
| A | JP 2020013752 A (TOYOTA INDUSTRIES CORP.) 23 January 2020 (2020-01-23) entire document | 1-22 |

Form PCT/ISA/210 (second sheet) (July 2022)

**INTERNATIONAL SEARCH REPORT**
Information on patent family members

International application No.

**PCT/CN2023/137495**

| Patent document cited in search report | | | Publication date (day/month/year) | Patent family member(s) | Publication date (day/month/year) |
|---|---|---|---|---|---|
| CN | 218414893 | U | 31 January 2023 | None | |
| CN | 113471637 | A | 01 October 2021 | None | |
| CN | 115064843 | A | 16 September 2022 | None | |
| CN | 215896628 | U | 22 February 2022 | None | |
| CN | 114204224 | A | 18 March 2022 | None | |
| JP | 2020013752 | A | 23 January 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310334895